# EUROPÄISCHE PATENTSCHRIFT

(11) **EP 0 606 306 B1**
(45) Veröffentlichungstag und Bekanntmachung des Hinweises auf die Patenterteilung: **29.11.1995**
(21) Anmeldenummer: 92920410.5
(22) Anmeldetag: 01.10.1992
(51) Int. Cl.: B01J 20/20, C01B 31/08

(54) **VERFAHREN ZUR HERSTELLUNG VON KOHLENSTOFFMOLEKULARSIEBEN**
METHOD OF PRODUCING CARBON MOLECULAR SIEVES
PROCEDE DE FABRICATION DE TAMIS MOLECULAIRES EN CARBONE

(30) Priorität: 04.10.1991 DE 4132971
(43) Veröffentlichungstag der Anmeldung: 20.07.1994
(73) Patentinhaber: Bergwerksverband GmbH, D-45307 Essen (DE)
(72) Erfinder: SCHRÖTER, Hans-Jürgen, D-4330 Mülheim/Ruhr (DE); HEIMBACH, Heinrich, D-4100 Duisburg 25 (DE); HENNING, Klaus-Dirk, D-4300 Essen 14 (DE); KNOBLAUCH, Karl, D-4300 Essen 1 (DE); SCHULTE-SCHULZE BERNDT, Alfons, D-4444 Bad Bentheim (DE); TARNOW, Ferdinand, D-4100 Duisburg 25 (DE)
(74) Vertreter: Schumacher, Horst, Dr. Dipl.-Phys.
(86) Internationale Anmeldenummer: EP9202275
(87) Internationale Veröffentlichungsnummer: WO9306922

(56) Entgegenhaltungen:
- EP-A- 0 102 902
- EP-A- 0 366 796
- DE-A- 3 006 171
- US-A- 3 979 330

## Beschreibung

Die Erfindung betrifft ein Verfahren zur Herstellung von Kohlenstoffmolekularsieben gemäß dem Oberbegriff des Anspruchs 1.

Es ist aus der DE-PS 36 18 426 und der darin im Stand der Technik zitierten DE-PS 21 19 829 bekannt, Kohlenstoffmolekularsiebe für die Trennung kleinmolekularer Gase, insbesondere O₂ und N₂ dadurch herzustellen, daß feingemahlene Kohle in einer Wirbelschicht mit Luft oxidiert, die Kohle nach Zugabe von Steinkohlenteerpech als Bindemittel und Wasser geformt und bei Temperaturen bis 900° C geschwelt, anschließend bei Temperaturen von 800 - 900° C mit Wasserdampf aktiviert und das schwachaktivierte Vorprodukt bei 750 - 850° C mit kohlenstoffabspaltenden Kohlenwasserstoffen behandelt wird.

Die so hergestellten Kohlenstoffmolekularsiebe werden in Druckwechsel-Verfahren zur Stickstoffgewinnung aus Luft eingesetzt. Die Betriebskosten von Druckwechsel-Verfahren bestehen überwiegend aus Kompressionskosten für die zu komprimierende Luft. Der sogenannte spezifische Luftbedarf, d. h. das Verhältnis der eingesetzten Luftmenge zur erzeugten Stickstoffmenge (m³ Luft/m³ Stickstoff) sollte möglichst gering sein. Dieser spezifische Luftbedarf ist unmittelbar mit der Sauerstoffaufnahmefähigkeit des Kohlenstoffmolekularsiebes verknüpft, die sich aus dem Unterschied in den Diffusionsgeschwindigkeiten von Stickstoff und Sauerstoff in dem Kohlenstoffmolekularsieb ergibt.

Zur Charakterisierung von Kohlenstoffmolekularsieben wurden bisher Labormeßmethoden angewendet, die sich die unterschiedlichen Diffusionsgeschwindigkeiten der zu trennenden Gase zu eigen machen.

In der DE-PS 36 18 426 und der DE-PS 21 19 829 wird ein Qualitätstest offenbart, bei dem ein bestimmtes Kohlenstoffmolekularsieb-Volumen, z. B. 200 ml, das zuvor evakuiert worden ist, jeweils, z. B. 1 Minute, mit Luft durchströmt und anschließend 1 Minute evakuiert wird. Anschließend mißt man die aufgenommene Gasmenge und stellt die mittlere und die maximale Sauerstoffkonzentration im evakuierten Gas fest (CMS-"Qualitätstest").

Die Qualität eines Kohlenstoffmolekularsiebes kann aber am besten durch praxisbezogene Druckwechseltests in einer Druckwechselanlage nachgewiesen werden. Dabei kommt es darauf an, daß die Luftmenge, die zur Gewinnung von 1 m³ Stickstoff benötigt wird, möglichst niedrig ist. Gleichzeitig ist man bestrebt, die pro m³ CMS-Volumen erzeugte Stickstoffmenge möglichst hoch zu halten, um das Volumen der Adsorber möglichst klein bemessen zu können. Demzufolge sind das Luft/Stickstoff-Verhältnis L/N (m³ (i.N.) Luft/ m³ (i.N.) N₂) sowie die Stickstoffproduktionsrate (m³ (i.N.) N₂ / m³ CMS x h) die entscheidenden Qualitätsmerkmale für ein Kohlenstoffmolekularsieb zur Stickstoffgewinnung.

Der Erfindung liegt die Aufgabe zugrunde, ein Kohlenstoffmolekularsieb herzustellen, mit dem im Druckwechselprozeß besonders niedrige Luft/Stickstoff-Verhältnisse und besonders hohe spezifische Stickstoffausbeuten erzielt werden.

Durch Versuche wurde gefunden, daß Kohlenstoffmolekularsiebe mit diesen Eigenschaften sich dadurch herstellen lassen, daß
a) die Steinkohle bis zu einer Körnung von 95 % < 20 »m gemahlen
b) die Schwelung in einem Drehrohrofen bei Temperaturen von 500 bis 850° C und mit einer Verweilzeit von 55 bis 65 min durchgeführt wird, um ein Schüttgewicht von 530 - 560 g/l zu erzielen und
c) das Schwelprodukt mit Wasserdampf bei 850 bis 900° C 165 bis 195 min lang aktiviert wird, bis durch die Wasserdampfvergasung und Sinterung ein Schüttgewicht zwischen 590 und 650 g/l erreicht wird.

Es hat sich herausgestellt, daß sich der niedrige Luftbedarf und die hohen Stickstofferzeugungsraten erzielen lassen, wenn bei der Herstellung von Kohlenstoffmolekularsieben eine Kohle, die bis zu einer Körnung von 95 % < 20 »m aufgemahlen wird, eingesetzt wird.

Außerdem ist die Einhaltung der Schüttgewichte bei der Schwelung und Aktivierung für die Qualität des Kohlenstoffmolekularsiebes sehr wichtig. Dabei wird die Verweilzeit des Schwelprodukts in dem Drehrohrofen so eingestellt, daß das aktivierte Produkt in einem Qualitätstest das fünf- bis sechsfache Volumen an Luft aufnimmt und bei der Desorption dieser Luft sich ein maximaler Sauerstoffgehalt von 23 Vol.-% im desorbierten Gas einstellt. D. h. das aktivierte Produkt hat einen geringen Trenneffekt für Sauerstoff und Stickstoff (Sauerstoffkonzentration in der Luft 21 Vol.-%). Wie bei den Beispielen belegt, darf dieser Trenneffekt in dem Qualitätstest zu einem maximalen Sauerstoffgehalt von höchstens 23 Vol.-% im desorbierten Gas führen.

Durch diese speziellen Vorbehandlungsschritte stellt sich eine Ausgangsporenstruktur ein, die besonders günstig für die Behandlung mit kohlenstoffabspaltenden Kohlenwasserstoffen ist, die im Kohlenstoffgerüst der Kokse unter Verengung schon vorhandener Poren reagieren.

Eine Aufmahlung von Steinkohlen bis auf eine Körnung von 95 % < 20 »m ist sehr aufwendig. Für eine derartige Aufmahlung werden in erster Linie Schwingmühlen und Strahlmühlen eingesetzt. Das gemahlene Produkt muß anschließend mit Hilfe der Windsichtung aufgetrennt werden.

Gemäß einer Weiterbildung des erfindungsgemäßen Verfahrens wird als feingemahlene Steinkohle der Filterstaub aus einer Aktivkohlenproduktionsanlage eingesetzt.

Für die Herstellung von Aktivkohlen wird ebenfalls gemahlene Steinkohle eingesetzt, die in einer Wirbelschicht mit Luft oxidiert wird. Bei dem Betrieb der Wirbelschicht wird der feinste Staubanteil aus dem Wirbelbett ausgetragen und in Filtereinrichtungen (Tuchfilter) abgeschieden. Dieser Filterstaub weist eine Körnung von 95 % < 20 »m auf und eignet sich somit als Einsatzprodukt für das erfindungsgemäße Verfahren.

Die Qualität der hergestellten Kohlenstoffmolekularsiebe wurde in einer standardisierten Druckwechselanlage gemessen ("Druckwechseltest"). Damit werden die Stickstoff-Produktionsrate (m³ (i. N.) N₂ / m³ CMS x h) und das Luft/Stickstoff-Verhältnis (m³ (i. N.) Luft / m³ (i. N.) N₂ ermittelt.

### Bedingungen der Druckwechselanlage:

| | |
|---|---|
| Adsorbervolumen: | 2 x 4 ltr. |
| Adsorptionsdruck: | 8 bar |
| Desorptionsdruck: | 1 bar |
| Zykluszeit: | 2 x 60 sec. |
| Druckausgleich zwischen den beiden Adsorbern: | 1 sec. |
| N₂-Rückflutung beim Druckaufbau mit Luft Versuchstemperatur: | 20 °C |

### Beispiel 1

Es wird einmal Steinkohle auf eine Korngröße 100 % < 80 »m (Charge 1A) und einmal auf eine Korngröße 95 % < 20 »m (Charge 1B) aufgemahlen und beide Produkte werden in einer Wirbelschicht mit Luft oxidiert. Die oxidierte Kohle wird anschließend mit Pech und Wasser gemischt und in einem Extruder zu 2,5 mm Formlingen extrudiert. Anschließend werden beide Produkte in gleicher Weise in einem Drehrohrofen bis zu einer Schwel-endtemperatur von 880° C behandelt und danach mit Wasserdampf aktiviert. Bei der Charge 1B wurde die Verweilzeit in dem Drehrohrofen gegenüber der Charge 1A verlängert. Die Aktivate wiesen folgende Eigenschaften auf:

| | Charge 1A | Charge 1B |
|---|---|---|
| Schüttdichte | 668 g/l | 626 g/l |
| max. O₂-Konz. | 22,5 Vol. % | 22,3 Vol.-% |

Die Aktivate wurden anschließend mit Benzol behandelt und danach in der Druckwechselanlage getestet. Das Ergebnis dieses Druckwechseltests ist der Tabelle 1 zu entnehmen.

**Tabelle 1**

| PSA-Testergebnisse bei versch. N₂-Reinheiten | Charge 1A (herkömmlich) | | | Charge 1B (erfindungsgemäß) | | |
|---|---|---|---|---|---|---|
| | 0,1 | 0,5 | 1 % O₂ | 0,1 | 0,5 | 1 % O₂ |
| N₂-Ausbeute N (Nm³/m³ CMSxh) | 55 | 100 | 130 | 78 | 117 | 133 |
| Luftbedarf L/N (Nm³ Luft/Nm³ N₂) | 5,1 | 3,2 | 2,8 | 3,6 | 2,75 | 2,50 |

Man ersieht aus der Tabelle, daß das aus feiner aufgemahlener Steinkohle hergestellte Kohlenstoffmolekularsieb (Charge 1B) sowohl deutlich mehr Stickstoff erzeugt als auch einen wesentlich geringeren Luftbedarf und damit niedrigeren Energiebedarf aufweist als das herkömmlich hergestellte Produkt (Charge 1A).

### Beispiel 2:

Ein Schwelprodukt, das wie in Beispiel 1, Charge 1B, hergestellt wurde, wird auf unterschiedliche Art und Weise mit Wasserdampf in einem Drehrohrofen aktiviert.

Die Temperatur im Drehrohrofen lag in beiden Fällen im Mittel bei 890° C. Durch unterschiedliche Zudosierung des Schwelproduktes wurden unterschiedliche Verweilzeiten im Drehrohrofen erreicht, so daß sich zwei unterschiedliche Aktivate gemäß Qualitätstest ergaben:

Beide Aktivate nehmen in dem Qualitätstest zwar das 5,5-fache ihres Volumens an Luft auf. Bei der Desorption wird jedoch bei dem Aktivat 2A eine maximale Sauerstoffkonzentration von 24,2 Vol.-% im Desorptionsgas gemessen, während bei der Aktivat 2B diese Konzentration nur 22,1 Vol.-% beträgt. Nach anschließender Behandlung mit Benzol ergeben sich Kohlenstoffmolekularsiebe, die in der Druckwechselapparatur folgende Testergebnisse zeigen:

| PSA-Testergebnisse bei 0,1 % O₂ | CMS aus Aktivat 2A | CMS aus Aktivat 2B (Erfindungsgemäß) |
|---|---|---|
| N₂-Ausbeute N (Nm³N₂/m³CMS.h) | 52,1 | 59,0 |
| Luftbedarf (Nm³Luft/Nm³N₂) | 4,65 | 4,26 |

Man sieht aus diesem Beispiel, daß sich bei erfindungsgemäßer Führung der Aktivierung ein verbessertes Kohlenstoff-Molekularsieb ergibt.

### Beispiel 3:

Aus den Oxidationsöfen (Wirbelschicht) einer Aktivkohlenproduktionsanlage wurde der Filterstaub, der eine Körnung 95 % < 20 »m aufweist, entnommen und erfindungsgemäß zu Kohlenstoffmolekularsieben weiterverarbeitet. Es ergeben sich im Druckwechseltest folgende Werte:

| PSA-Testergebnisse | Filterstaub-CMS | |
|---|---|---|
| | 0,1 % O₂ | 0,5 % O₂ |
| N₂-Ausbeute | 78,6 | 105 |
| Luftbedarf | 3,6 | 2,8 |

Aus der Tabelle ist ersichtlich, daß das aus Filterstaub hergestellte Kohlenstoffmolekularsieb ähnliche Werte aufweist, wie das aus erfindungsgemäß aufgemahlener Steinkohle hergestellte Kohlenstoffmolekularsieb (Beispiel 1, Charge 1B). Es zeigt somit deutlich bessere Werte als ein Kohlenstoffmolekularsieb, das aus Steinkohle mit einer Körnung 100 % < 80 »m hergestellt wurde (Beispiel 1, Charge 1A).

## Patentansprüche

1. Verfahren zur Herstellung von Kohlenstoffmolekularsieben für die Trennung von Sauerstoff und Stickstoff, bei dem feingemahlene Steinkohle in einer Wirbelschicht mit Luft oxidiert, die Kohle nach Zugabe von Steinkohlenteerpech als Bindemittel und Wasser geformt und bei Temperaturen bis 900° C geschwelt, anschließend bei Temperaturen von 800 - 900° C mit Wasserdampf aktiviert und das schwachaktivierte Vorprodukt bei 750 - 850° C mit kohlenstoffabspaltenden Kohlenwasserstoffen behandelt wird, **dadurch gekennzeichnet, daß**
a) die Steinkohle bis zu einer Körnung von 95 % < 20 »m gemahlen
b) die Schwelung in einem Drehrohrofen bei Temperaturen von 500 bis 850 °C und mit einer Verweilzeit von 55 bis 65 min durchgeführt wird, um ein Schüttgewicht von 530 - 560 g/l zu erzielen und
c) das Schwelprodukt mit Wasserdampf bei 850 bis 900 °C 165 bis 195 min lang aktiviert wird, bis durch die Wasserdampfvergasung und Sinterung ein Schüttgewicht zwischen 590 und 650 g/l erreicht wird.

2. Abänderung des Verfahrens nach Anspruch 1, **dadurch gekennzeichnet, daß** anstelle von feingemahlener Steinkohle Filterstaub einer Aktivkohlenproduktionsanlage mit einer Körnung von 95 % < 20 »m eingesetzt wird.

## Claims

1. A process for producing carbon molecular sieves for separation of oxygen and nitrogen, wherein fine-ground hard coal is oxidised with air in a fluidized bed, the coal is moulded after the addition of water and coal-tar pitch as a binding agent, and is carbonised at temperatures up to 900°C, and is subsequently activated with water vapour at temperatures of 800 - 900°C, and the weak-activated intermediate product is treated with carbon-cleaving hydrocarbons at 750 - 850°C, **characterized in that:**
a) the hard coal is ground to a grain size of 95 % < 20 »m;
b) low-temperature carbonisation is carried out in a cylindrical rotary kiln at temperatures from 500 to 850°C with a residence time of 55 to 65 minutes, in order to produce an apparent density of 530 - 560 g/l; and
c) the low-temperature-carbonised product is activated with water vapour at 850 to 900°C for 165 to 195 minutes, until an apparent density between 590 and 650 g/l is achieved by the water-vapour gasification and sintering.

2. A modification of the process of claim 1, **characterised in that** filter dust from an activated-carbon production plant, with a grain size of 95 % < 20 »m, is used instead of fine-ground hard coal.

## Revendications

1. Procédé pour la fabrication de tamis moléculaire en carbone pour la séparation de l'oxygène et de l'azote, dans lequel de la fine poudre de houille s' oxyde avec l'air en une couche fluidisée, du charbon étant formé après apport d'eau et de goudron de brai de houille en tant que liant et étant gonflé à des températures jsuqu'à 900°C pour être activé ensuite à des températures de 800° - 900°C avec de la vapeur d'eau et le préproduit faiblement activé étant traité à 750 - 850°C avec de l'hydrogène éliminant le carbone,
caractérisé en ce que
a) la houille est pulvérisée à une granulométrie de 95 % < 20 »m
b) le gonflement est exécuté dans un four tubulaire rotatif à des températures de 500 à 850°C et pendant un temps de séjour de 55 à 65 min pour obtenir une densité en vrac de 530 - 560 g/l et
c) le produit gonflé est activé avec de la vapeur d'eau de 850° à 900°C pendant 165 à 195 min, de manière à obtenir, par le dégazage de la vapeur d'eau et le frittage, une densité en vrac comprise entre 590 et 650 g/l.

2. Modification du procédé selon la revendication 1, caractérisée en ce qu'il est utilisé, à la place de la fine poudre de houille, de la poussière de filtre d'une installation de production de charbon actif d'une granulométrie de 95 % < 20 »m.
